# EUROPEAN PATENT APPLICATION

(11) **EP 4 563 547 A1**
(43) Date of publication of application: **04.06.2025**
(21) Application number: 23213069.0
(22) Date of filing: 29.11.2023
(51) Int. Cl.: C04B 35/48, C04B 33/04, C04B 33/13, C04B 33/32, C04B 35/20, C04B 35/626

(54) **FAR-INFRARED EMITTING MATERIAL AND PREPARATION METHOD THEREOF**

(71) Applicant: Any Color International Limited., Tainan City 710 (TW)
(72) Inventor: Shiao-Wu, Lai, 710 Tainan City (TW); Yang-Kun, Ou, 710 Tainan City (TW); Huang-Sheng, Lin, 710 Tainan City (TW); Chung-I, Chien, 710 Tainan City (TW)
(74) Representative: Kanzlei Dr. Negendanck Patentmanufaktur

(57) **Abstract**

Disclosed are a far-infrared emitting material and its preparation method. The far-infrared emitting material includes zirconium monoxide and at least one natural silicate mineral soil; the far-infrared emitting material and its preparation method use at least two of the above materials as raw materials, which are mixed according to a specific proportion, sintered, and crushed into granules. In the preparation method, the material is sintered within a temperature range of 1100-1250°C and evenly mixed to form a slurry by a ball mill. The slurry is dispersed by adding an additive when needed and finally sifted, baked, dried to form a dry powder which is sifted to form a far-infrared emitting material with high emissivity and wide wavelength in the range of 8-20 µm.

## Description

### BACKGROUND

### Technical Field

The present disclosure relates to a material and its preparation method, more particularly relates to a far-infrared emitting material and its preparation method.

### Description of Related Art

According to the main function of far-infrared rays in human body, the thermal and non-thermal effects of the far-infrared resonance absorption dilate blood vessels, promote metabolism, and change clusters of water molecules into independent small water molecules which are entered into the cell to promote biochemical reactions or increase the amount of β-endorphins and β-lysine enkephalins to suppress pain, etc., and thus it attracts everyone's attention.

Far-infrared rays are associated with biological growth and development in the micrometer range due to excellent penetration, and they can penetrate into the organism and resonate with the cells, and can be absorbed by the organisms and converted into heat, which can promote the activation of the organisms, and the human body can absorb the far-infrared rays to promote blood circulation and metabolism. For example, the far-infrared material or its manufacturing method disclosed in P.R.C. Pat. Nos. CN1027365, CN1036991, CN1050588, CN1053050, CN1053784, CN1054244, CN1084839, and CN102775188, and R.O.C. Pat. Nos. TW201341340, and TW202100704 is not only complicated and costly, but the wavelength range also cannot be widened, so its use is limited, which greatly reduces its practicality. This issue is a breakthrough that is highly desired by the technical people and consumers in this field.

### SUMMARY

In view of the aforementioned deficiencies of the prior art, it is a primary objective of the present disclosure to overcome the deficiencies of the prior art by providing a far-infrared emitting material and its preparation method, in which the far-infrared emitting material can emit far-infrared rays with a wider wavelength in the range of 8-20 µm and a high specific emissivity (>98%) without requiring special high temperature.

A secondary objective of the present disclosure is to provide a far-infrared emitting material and its preparation method, in which the far-infrared emitting material adopts at least two materials as raw materials, which are mixed according to a specific proportion, sintered, crushed into granules, and then formed into a slurry by a large ball mill and added with an additive when needed, and finally the slurry is sifted, baked, dried to form a dry powder, and sifted.

Another objective of the present disclosure is to provide a far-infrared emitting material and its preparation method, in which the far-infrared emitting material is made with high emissivity over a wider range of wavelengths, and the preparation method is simple and low-cost and capable of improving its scope of applicability.

To overcome the aforementioned deficiencies of the prior art, the related-art far-infrared material or its manufacturing method as disclosed in P.R.C. Pat. Nos. CN1027365, CN1036991, CN1050588, CN1053050, CN1053784, CN1054244, CN1084839, and CN102775188, and R.O.C. Pat. Nos. TW201341340 and TW202100704 is not only complicated and costly, but the wavelength range also cannot be widened, so that the application is limited, which greatly reduces its practicality.

To achieve the aforementioned objective, the present disclosure provides a far-infrared emitting material includes: 40%~70% of zirconium monoxide and 60%~30% of at least one natural silicate mineral soil.

In the present disclosure, the natural silicate mineral soil includes: a serpentine subgroup, a clay mineral group or a mica group or chlorite group.

In the present disclosure, the serpentine subgroup of the natural silicate mineral soil includes: antigorite-Mg₃Si₂O₅(OH)₄, chrysotile-Mg₃Si₂O₅(OH)₄ or lizardite-Mg₃Si₂O₅(OH)₄.

In the present disclosure, the clay mineral group of the natural silicate mineral soil includes: polyhydric kaolin-Al₂Si₂O₅(OH)₄, kaolinite-Al₂Si₂O₅(OH)₄, Illite-(K, H₃O)(Al, Mg, Fe)₂(Si, Al)₄O₁₀[(OH)₂, (H₂O)], montmorillonite-(Na, Ca)_{0.33}(Al, Mg)₂Si₄O₁₀(OH)₂•nH₂O, vermiculite-(MgFe, Al)₃(Al, Si)₄O₁₀(OH)₂•4H₂O, talc-Mg₃Si₄O₁₀(OH)₂, sepiolite-Mg₄Si₆O₁₅(OH)₂•6H₂O, palygorskite-(Mg, Al)₂Si₄O₁₀(OH)•4(H₂O) or pyrophyllite-Al₂Si₄O₁₀(OH)₂.

In the present disclosure, the mica group of the natural silicate mineral soil includes: biotite-K(Mg, Fe)₃(AlSi₃)O₁₀(OH)₂, muscovite-KAl₂(AlSi₃)O₁₀(OH)₂, phlogopite-KMg₃(AlSi₃)O₁₀(OH)₂, lepidolite-K(Li, Al)₂₋₃(AlSi₃)O₁₀(OH)₂, margarite-CaAl₂(Al₂Si₂)O₁₀(OH)₂ or glauconite-(K, Na)(Al, Mg, Fe)₂(Si, Al)₄O₁₀(OH)₂.

In the present disclosure, the chlorite group of the natural silicate mineral soil includes: chlorite group-(Mg, Fe)₃(Si, Al)₄O₁₀(OH)₂•(Mg, Fe)₃(OH)₆.

To achieve the aforementioned objectives, the present disclosure provides a far-infrared emitting material and its preparation method, in which at least two of the above materials are used as raw materials, mixed according to a specific proportion, sintered, and crushed into granules, characterized in that the raw materials are sintered within a temperature range of 1100-1250°C, and then evenly mixed to form a slurry by a large ball mill, an additive is added when needed and dispersed, and finally the slurry is sifted, baked, dried to powder, and sifted to produce the far-infrared emitting material with a high emissivity and a wide wavelength in the range of 8-20µm.

In the present disclosure, the mixing process uses a mixing barrel for mixing according to a specific proportion.

In the present disclosure, the sintering process uses a kiln or a furnace for sintering, and the raw materials are sintered into blocks within a temperature range of 1100-1250 °C.

In the present disclosure, the process of crushing the material into granules adopts a coagulation grinder and adds zirconium balls and pure water, where the ratio of pure water to the product is 1:1.

Compared with the effects of the prior art, the present disclosure provides a far-infrared emitting material including zirconium monoxide and at least one natural silicate mineral soil; in which at least two of the above infrared emitting materials are used as raw materials, mixed according to a specific proportion, sintered, and crushed into granules, characterized in that the raw materials are sintered within a temperature range of 1100-1250°C; and then evenly mixed to form a slurry by a large ball mill, an additive is added when needed and dispersed, and finally the slurry is sifted, baked, dried to powder, and sifted to produce the far-infrared emitting material with high emissivity and wide wavelength, and the preparation method is simple and low-cost and capable of improving its scope of applicability. The present disclosure will greatly increase the industrial utilization with novelty and inventiveness.

### BRIEF DESCRIPTION OF THE DRAWINGS

FIG. 1 is a schematic view showing the structure of a far-infrared emitting material of the present disclosure; and
FIG. 2 is a flow chart of the preparation method of a far-infrared emitting material of the present disclosure.

### DESCRIPTION OF THE EMBODIMENTS

This disclosure will now be described in more detail with reference to the accompanying drawings that show various embodiments of this disclosure. It is intended that the embodiments and drawings disclosed herein are to be considered illustrative rather than restrictive, and also noteworthy that the drawings are not necessary drawn according to the real proportion and precise configuration and these attached drawings should not limit the scope of the patent of this disclosure in actual implementation.

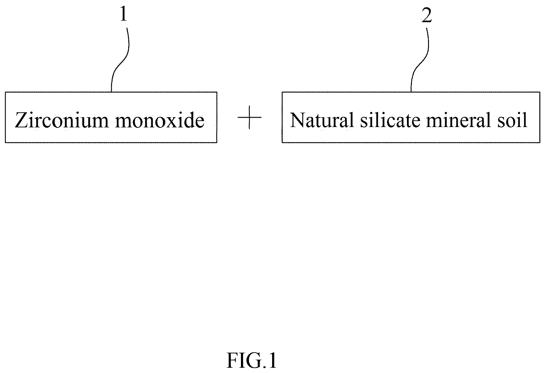

With reference to FIG. 1 for the structure of a far-infrared emitting material of the present disclosure, the far-infrared emitting material includes: 65% of zirconium monoxide 1 mixed with 35% of at least one natural silicate mineral soil 2; the natural silicate mineral soil 2 includes: a serpentine subgroup, a clay mineral group or a mica group or a chlorite group; wherein the serpentine subgroup of the natural silicate mineral soil 2 includes: antigorite-Mg₃Si₂O₅(OH)₄, chrysotile-Mg₃Si₂O₅(OH)₄ or lizardite-Mg₃Si₂O₅(OH)₄; the clay mineral group of the natural silicate mineral soil 2 includes: polyhydric kaolin-Al₂Si₂O₅(OH)₄, kaolinite-Al₂Si₂O₅(OH)₄, Illite-(K, H₃O)(Al, Mg, Fe)₂(Si, Al)₄O₁₀[(OH)₂, (H₂O)], montmorillonite-(Na, Ca)0.33(Al, Mg)₂Si₄O₁₀(OH)₂•nH₂O, vermiculite-(MgFe, Al)₃(Al, Si)₄O₁₀(OH)₂•4H₂O, talc-Mg₃Si₄O₁₀(OH)₂, sepiolite-Mg₄Si₆O₁₅(OH)₂•6H₂O, palygorskite-(Mg, Al)₂Si₄O₁₀(OH)•4(H₂O) or pyrophyllite-Al₂Si₄O₁₀(OH)₂; the mica group of the natural silicate mineral soil 2 includes: biotite-K(Mg, Fe)₃(AlSi₃)O₁₀(OH)₂, muscovite-KAl₂(AlSi₃)O₁₀(OH)₂, phlogopite-KMg₃(AlSi₃)O₁₀(OH)₂, lepidolite-K(Li, Al)_{2- 3}(AlSi₃)O₁₀(OH)₂, margarite-CaAl₂(Al₂Si₂)O₁₀(OH)₂ or glauconite-(K, Na)(Al, Mg, Fe)₂(Si, Al)₄O₁₀(OH)₂; and the chlorite group of the natural silicate mineral soil 2 includes: chlorite group-(Mg, Fe)₃(Si, Al)₄O₁₀(OH)₂•(Mg, Fe)₃(OH)₆.

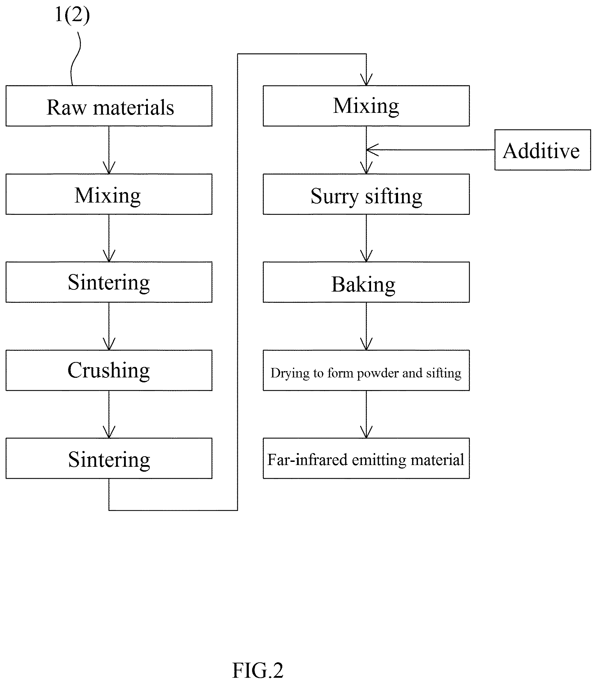

With reference to FIG. 2 for the flow chart of a far-infrared emitting material preparation method in accordance with the far-infrared emitting material preparation method uses two of the above infrared emitting materials (zirconium monoxide 1 and the natural silicate mineral soil 2) as raw materials, and the raw materials are mixed according to a specific proportion, sintered, and crushed into granules. The preparation method is characterized in that the raw materials are sintered within a temperature range of 1100-1250°C, and then evenly mixed to form a slurry by a large ball mill, an additive is added when needed and dispersed, and finally the slurry is sifted, baked, dried to powder, and sifted to produce the far-infrared emitting material with a high emissivity and a wide wavelength in the range of 8-20µm; the mixing process uses a mixing barrel for the mixing according to a specific proportion; the sintering process uses a kiln or a furnace for the sintering, and the raw materials are sintered into blocks within a temperature range of 1100-1250 °C ; and the process of crushing the material into granules adopts a coagulation grinder and adds zirconium balls and pure water, where the ratio of pure water to the product is 1:1.

In another embodiment of the present disclosure, far-infrared emitting material is composed of 22-50% of ZrO, 20-60% of Al₂O₃, 5-28% of ZnO, and 25-65% of SiO₂ (in terms of percentage by weight) and the material so made is a white powder, and capable of expanding the scope of applicability.

| Testing Item | Testing Result |
|---|---|
| SiO₂ | 29.31% |
| Al₂O₃ | 13.49% |
| Na₂O | 1.45% |
| K₂O | 0.01% |
| MgO | N.D. |
| CaO | 0.05% |
| TiO₂ | 0.17% |
| Fe₂O₃ | 0.14% |
| Y₂O₃ | 0.13% |
| ZnO | 19.19% |
| ZrO₂ | 36.06% |
| Total | 100.00% |

Compared with the effects of the prior art, the present disclosure provides a far-infrared emitting material including zirconium monoxide 1 and at least one natural silicate mineral soil 2, in which two of the above infrared emitting materials are used as raw materials, and the raw materials are mixed according to a specific proportion, sintered, crushed into granules, characterized in that the raw materials are sintered within the temperature range of 1100-1250°C, and then evenly mixed to form a slurry by a large ball mill, an additive is added when needed and dispersed, and finally the slurry is sifted, baked, dried to powder, and sifted to produce the far-infrared emitting material with high emissivity and wide wavelength, and the preparation method is simple and low-cost and capable of improving its scope of applicability. The present disclosure will greatly increase the industrial utilization with novelty and inventiveness.

## Claims

1. A far-infrared emitting material, comprising: 40%~70% of zirconium monoxide and 60%~30% of at least one natural silicate mineral soil; and the natural silicate mineral soil comprising: a serpentine subgroup, a clay mineral group or a mica group or a chlorite group.

2. The far-infrared emitting material according to claim 1, wherein the serpentine subgroup of the natural silicate mineral soil comprises: antigorite-Mg₃Si₂O₅(OH)₄, chrysotile-Mg₃Si₂O₅(OH)₄ or lizardite-Mg₃Si₂O₅(OH)₄.

3. The far-infrared emitting material according to claim 1, wherein the clay mineral group of the natural silicate mineral soil comprises: polyhydric kaolin-Al₂Si₂O₅(OH)₄, kaolinite-Al₂Si₂O₅(OH)₄, Illite-(K, H₃O)(Al, Mg, Fe)₂(Si, Al)₄O₁₀[(OH)₂, (H₂O)], montmorillonite-(Na, Ca)_{0.33}(Al, Mg)₂Si₄O₁₀(OH)₂•nH₂O, vermiculite-(MgFe, Al)₃(Al, Si)₄O₁₀(OH)₂•4H₂O, talc-Mg₃Si₄O₁₀(OH)₂, sepiolite-Mg₄Si₆O₁₅(OH)₂•6H₂O, palygorskite-(Mg, Al)₂Si₄O₁₀(OH)•4(H₂O) or pyrophyllite-Al₂Si₄O₁₀(OH)₂.

4. The far-infrared emitting material according to claim 1, wherein the mica group of the natural silicate mineral soil comprises: biotite-K(Mg, Fe)₃(AlSi₃)O₁₀(OH)₂, muscovite-KAl₂(AlSi₃)O₁₀(OH)₂, phlogopite-KMg₃(AlSi₃)O₁₀(OH)₂, lepidolite-K(Li, Al)₂₋₃(AlSi₃)O₁₀(OH)₂, margarite-CaAl₂(Al₂Si₂)O₁₀(OH)₂ or glauconite-(K, Na)(Al, Mg, Fe)₂(Si, Al)₄O₁₀(OH)₂.

5. The far-infrared emitting material according to claim 1, wherein the chlorite group of the natural silicate mineral soil comprises: a chlorite group-(Mg, Fe)₃(Si, Al)₄O₁₀(OH)₂•(Mg, Fe)₃(OH)₆.

6. A preparation method of a far-infrared emitting material, using at least two infrared emitting materials of any one of the claims 1 to 6 as raw materials which are mixed according to a specific proportion, sintered, and crushed into granules, **characterized in that** the raw materials are sintered within a temperature range of 1100-1250°C, and then evenly mixed to form a slurry by a large ball mill, an additive is added when needed and dispersed, and finally the slurry is sifted, baked, dried to powder, and sifted to produce the far-infrared emitting material with a high emissivity and a wide wavelength in the range of 8-20µm; the mixing process uses a mixing barrel for the mixing according to a specific proportion; the sintering process uses a kiln or a furnace for the sintering, and the raw materials are sintered into blocks within a temperature range of 1100-1250°C.
